# FASCICULE DE BREVET EUROPEEN

(11) **EP 4 114 652 B1**
(45) Date de publication et mention de la délivrance du brevet: **06.12.2023**
(21) Numéro de dépôt: 21714334.6
(22) Date de dépôt: 03.03.2021
(51) Int. Cl.: B32B 3/08, B32B 3/12, B32B 3/28, B32B 7/12, B32B 7/14, B32B 9/00, B32B 9/04, B32B 15/04, B32B 15/20, B32B 27/08, B32B 27/28, B32B 27/38, B32B 27/42, B29D 24/00, F02K 1/82, G10K 11/172, B32B 37/00

(54) **PROCÉDÉ DE FABRICATION D'UNE STRUCTURE À ÂMES ALVÉOLAIRES POUR NACELLE DE TURBORÉACTEUR**
VERFAHREN ZUR HERSTELLUNG EINER STRUKTUR MIT ZELLKERNEN FÜR EINE TURBOSTRAHLGONDEL
METHOD FOR MANUFACTURING A STRUCTURE WITH CELLULAR CORES FOR A TURBOJET NACELLE

(30) Priorité: 04.03.2020 FR 2002198
(43) Date de publication de la demande: 11.01.2023
(73) Titulaire: Safran Nacelles, 76700 Gonfreville l'Orcher (FR)
(72) Inventeur: DESJOYEAUX, Bertrand, 77550 MOISSY-CRAMAYEL (FR); VERSAEVEL, Marc, 77550 MOISSY-CRAMAYEL (FR); PREAU, Mathieu, 77550 MOISSY-CRAMAYEL (FR); MOREAU, Laurent, 77550 MOISSY-CRAMAYEL (FR)
(74) Mandataire: Germain Maureau
(86) Numéro de dépôt international: PCT/FR2021/050363
(87) Numéro de publication internationale: WO 2021/176182

(56) Documents cités:
- GB-A- 1 470 036
- US-A1- 2013 052 398
- US-A1- 2015 041 247

## Description

La présente invention concerne un procédé de fabrication d'une structure à âmes alvéolaires apte à être utilisée dans un panneau d'atténuation acoustique tel que par exemple un panneau d'atténuation acoustique de nacelle de turboréacteur. L'invention concerne également une structure à âme alvéolaire ainsi obtenue, et un panneau d'atténuation acoustique et une nacelle comportant une telle structure à âmes alvéolaires.

Un aéronef est propulsé par un ou plusieurs ensembles propulsifs comprenant chacun un turboréacteur logé dans une nacelle. Chaque ensemble propulsif est rattaché à l'aéronef par un mât situé généralement sous ou sur une aile ou au niveau du fuselage de l'aéronef.

Une nacelle présente généralement une structure tubulaire comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

Les turboréacteurs sont générateurs d'une pollution sonore importante. Il existe une forte demande visant à réduire cette pollution, et ce d'autant plus que les turboréacteurs utilisés deviennent de plus en plus puissants. Pour ce faire, on dispose le long de surfaces guidant les flux d'air du turboréacteur des structures de type acoustique comportant une peau avant perméable à l'air, dite acoustique ou résistive, et une peau arrière imperméable à l'air, dite pleine. Une âme alvéolaire comprenant des cellules est disposée entre ces deux peaux, et fixée à au moins une des deux peaux. Dans ce type de structure acoustique, la peau acoustique est agencée en regard de la source sonore à atténuer, et elle présente des perforations pour permettre le passage des ondes sonores à travers la peau acoustique, de sorte que l'onde sonore pénètre dans les cellules de l'âme alvéolaire. Chaque cellule s'étend suivant un axe principal longitudinal correspondant à un axe de propagation du bruit. La longueur des cellules permet de déterminer la fréquence à laquelle l'atténuation acoustique des cellules est maximale. Typiquement, une âme alvéolaire d'une épaisseur de 30 millimètres est adaptée pour atténuer des fréquences proches de 2000 Hertz, et une âme alvéolaire d'une épaisseur de 70 millimètres est adaptée pour atténuer des fréquences proches de 880 Hertz.

D'une façon connue, selon une technique dite de structure « Nid d'abeille », une âme alvéolaire est obtenue généralement en superposant plusieurs feuilles de métal, d'alliage léger ou en composite entre lesquelles sont disposés ponctuellement des moyens de collage qui font adhérer les feuilles entre elles en certains points, appelés zones nodales. La structure à âme alvéolaire ainsi produite est dite sous forme compactée. Afin de former les cellules alvéolaires, la structure sous forme compactée subit un étirement de sorte à séparer les feuilles qui restent jointes entre elles au niveau des zones nodales. La structure à âme alvéolaire ainsi produite est dite sous forme expansée.

La longueur des cellules permet de déterminer la fréquence à laquelle l'atténuation acoustique des cellules est maximale. Typiquement, une âme alvéolaire d'une épaisseur de 30 millimètres est adaptée pour atténuer des fréquences proches de 2000 Hertz, et une âme alvéolaire d'une épaisseur de 70 millimètres est adaptée pour atténuer des fréquences proches de 880 Hertz.

Pour atténuer acoustiquement de basses fréquences de sons, et limiter l'épaisseur des cellules acoustiques, il est connu de disposer un obstacle dans les cellules acoustiques, de façon à augmenter la longueur du chemin parcouru par les ondes sonores à travers la cellule.

Un tel obstacle est par exemple un cône, ouvert au niveau de sa base et comportant une deuxième ouverture définissant une séparation entre deux conduits dans la cellule acoustique et un col de communication entre ces deux conduits de circulation de l'onde sonore. En prévoyant de tels cônes, on abaisse la fréquence moyenne efficacement atténuée par le système acoustique, sans pour autant augmenter l'épaisseur de la structure acoustique.

Ces cônes sont mis en place dans la structure à âme alvéolaire notamment par soudage. La fabrication de ces cônes à l'intérieur des cellules alvéolaire est ainsi extrêmement complexe, et la durée nécessaire à la fabrication de la structure à âme alvéolaire est très élevée. Aussi, une structure à âme alvéolaire fabriquée par ce type de procédé de l'art antérieur est très onéreuse. US 2013/052398 A1 décrit un procédé de fabrication d'une structure à âme alvéolaire pour panneau d'atténuation acoustique, la structure à âme alvéolaire comportant une pluralité de cellules acoustiques accolées qui forment l'âme alvéolaire, le procédé comprenant une étape de fixation de plaques entre elles par des zones de collage parallèles entre elles et transversales à la direction longitudinale des plaques formant ainsi des zones nodales, et une étape de déploiement dans laquelle les plaques sont écartées l'une de l'autre de sorte à former la paroi périphérique des cellules.

La présente invention vise à s'affranchir des inconvénients ci-dessus, et concerne pour ce faire un procédé de fabrication d'une structure à âme alvéolaire pour panneau d'atténuation acoustique, la structure à âme alvéolaire comportant une pluralité de cellules acoustiques accolées qui forment l'âme alvéolaire, chaque cellule acoustique s'étendant suivant un axe principal correspondant à un axe de propagation d'une onde sonore, depuis une extrémité avant jusqu'à une extrémité arrière, et étant délimitée par une paroi périphérique définissant un conduit primaire de circulation de l'onde sonore, au moins une cellule comportant un conduit secondaire de circulation de l'onde sonore, le conduit secondaire comprenant une paroi de conduit secondaire présentant une première extrémité proximale à l'extrémité avant de la cellule, la première extrémité définissant une entrée d'onde sonore, et une deuxième extrémité opposée, le conduit secondaire comprenant une sortie d'onde sonore située à proximité de l'extrémité arrière de la cellule, le procédé étant remarquable en ce qu'il comprend :
- Une étape de fixation dans laquelle :
- On applique, sur une première plaque longitudinale, des bandes adhésives parallèles entre elles et transversales à la direction longitudinale de ladite première plaque, de sorte à former des zones nodales,
- On fixe le conduit secondaire sous forme d'un élément (34, 34') aplati, sur la première plaque entre deux zones nodales, par collage au niveau de son entrée d'onde sonore,
- On applique une deuxième plaque de sorte qu'elle soit fixée par collage aux zones nodales, et à l'élément aplati au niveau de l'entrée d'onde ;
- Une étape de déploiement dans laquelle les première et deuxième plaques sont écartées l'une de l'autre de sorte à former la paroi périphérique des cellules et de sorte que l'élément (34, 34') aplati soit déployé pour former le conduit secondaire.

Ainsi, l'étape de fixation du conduit secondaire est réalisée à plat, ce qui permet de simplifier le procédé de fabrication et ainsi de réduire les couts. Suite à l'étape de fixation, on obtient un bloc non expansé, nommé également bloc nida non expansé.

A noter que par bande adhésive on entend tout moyen de collage, tel qu'un film de colle ou tout autre élément collant.

Le conduit secondaire est un guide pour onde sonore.

Les zones nodales correspondent aux zones de jonction entre les première et deuxième plaques pour former les parois périphériques des cellules.

L'élément aplati présente la forme d'au moins un conduit secondaire sous forme aplatie, d'une cellule acoustique.

Selon d'autres caractéristiques de l'invention, le procédé de l'invention comporte l'une ou plusieurs des caractéristiques optionnelles suivantes considérées seules ou selon toutes les combinaisons possibles.

Dans la forme déployée de l'âme alvéolaire, et tranchée à l'épaisseur voulue, le conduit secondaire est caractérisé en ce qu'il est collé le long d'un périmètre d'attache aux parois de la cellule délimitée par deux zones nodales entre deux plaques. En outre il comporte dans la partie non collée aux parois de la cellule, au moins un orifice de façon à constituer un col de connexion entre conduit primaire et conduit secondaire.

La partie non collée présente un périmètre plus faible que le périmètre d'attache. Selon une caractéristique, l'étape de fixation est répétée de préférence en alternant les positions des zones nodales, de façon à obtenir plusieurs couches superposées d'éléments aplatis entre des première et deuxième plaques, avant l'étape de déploiement.

Selon cette caractéristique, la deuxième plaque fait office de deuxième plaque pour une couche et de première plaque pour une autre couche adjacente.

Selon une caractéristique, l'étape de déploiement est précédée d'une étape de consolidation au cours de laquelle les bandes adhésives sont des bandes organiques polymérisés.

Selon une caractéristique, au moins deux cellules accolées comportent un conduit secondaire de circulation de l'onde sonore, lesdits circuits secondaires étant fixés à la première plaque sous forme aplatie en étant liés l'un à l'autre par leur paroi au niveau de leur entrée d'onde.

Selon une caractéristique, l'élément aplati présente la forme de deux conduits secondaires aplatis, reliés par leur entrée d'onde sonore respective.

Ainsi, lors de l'étape de fixation, on fixe entre deux zones nodales un élément aplati présentant la forme d'un premier et d'un deuxième conduit secondaire aplati, reliés par leur entrée d'onde sonore, avant d'appliquer la deuxième plaque, de façon à obtenir un ensemble sensiblement plat, comprenant la première plaque, la deuxième plaque et l'élément aplati.

Selon cette caractéristique, le procédé comporte une étape de découpe, transversalement à la direction longitudinale des première et deuxième plaques, de sorte à dissocier l'élément aplati pour former deux ensemble distinct, l'un comportant un premier conduit secondaire et l'autre comportant un deuxième conduit secondaire. Dans un mode de réalisation cette étape de découpe est réalisée par usinage après l'étape de déploiement.

En variante, l'étape de découpe est réalisée avant l'étape de déploiement.

Selon cette caractéristique, l'étape de déploiement est réalisée séparément pour chaque ensemble sensiblement plat comportant un conduit secondaire aplati.

Selon une caractéristique, les cellules ont une plus grande dimension comprise entre 3 et 50 mm.

Selon une caractéristique, les zones nodales sont espacées d'une distance comprise entre 3 et 100 mm et de préférence entre 4 et 75 mm.

Selon une caractéristique, le périmètre d'attache du conduit secondaire aux parois de la cellule est compris entre 9 et 300 mm.

Selon une caractéristique, les zones nodales sont espacées d'une distance variable entre 3 et 100 mm.

Selon une caractéristique, l'élément aplati présente une forme conique ou tronconique aplatie de sorte que le conduit secondaire présente une forme conique ou tronconique. En variante, l'élément aplati présente une forme de diabolo, d'ogive ou de demi-cercle aplati, de sorte que le conduit secondaire présente une forme de diabolo, d'ogive ou de demi-cercle.

Selon une caractéristique, la sortie d'onde du conduit secondaire est de diamètre inférieur à celui de l'entrée d'onde.

Selon une caractéristique, la sortie d'onde du circuit secondaire est disposée dans la paroi du conduit secondaire, dans sa moitié arrière, c'est-à-dire proximale à l'extrémité arrière de la cellule.

Selon une caractéristique, les cellules acoustiques présentent une forme polygonale déployable (par exemple pentagonale ou hexagonale).

Selon cette caractéristique, les première et deuxième plaques présentent des pliures destinées à délimiter des arêtes pour obtenir des cellules acoustiques polygonales lors de l'étape de déploiement.

En outre, l'élément aplati présente des pliures destinées à délimiter des arêtes pour obtenir un conduit secondaire de forme conique ou tronconique polygonale.

Selon une caractéristiques, les cellules acoustiques présentent des parois périphériques planes ou ondulées.

Selon une caractéristique, la sortie d'onde du circuit secondaire est de forme circulaire. Selon une caractéristique, le matériau constitutif des première et deuxième plaques est un alliage d'aluminium.

Selon une caractéristique, le matériau constitutif du conduit secondaire est un matériau organique, de préférence choisi parmi les groupes de thermoplastiques, tel que par exemple les PEI PEEK, PI, Polyester, PA.

Selon une caractéristique, le matériau constitutif des première et deuxième plaques est un matériau composite tel qu'un matériau à matrice phénolique, époxyde, bismaléideimide (BMI) ou polyimide et comportant des fibres telles que des fibres de verre, des fibres déposées sous la marque Nomex ou Kevlar.

Selon une autre caractéristique, le matériau constitutif des première et deuxième plaques est un matériau composite de la famille des matériaux dits céramiques, à base de fibres de carbone ou de SiC ou d'oxydes aluminés, et à matrice céramisée telle que géopolymères, Sic ou oxydes aluminés.

L'invention concerne en outre une structure à âme alvéolaire obtenue selon le procédé tel que décrit précédemment, comprenant au moins une cellule acoustique s'étendant suivant un axe principal correspondant à un axe de propagation d'une onde sonore, depuis une extrémité avant jusqu'à une extrémité arrière, et étant délimitée par une paroi périphérique définissant un conduit primaire de circulation de l'onde sonore, la cellule comportant un conduit secondaire de circulation de l'onde sonore, le conduit secondaire comprenant une paroi de conduit secondaire, présentant une première extrémité proximale à l'extrémité avant de la cellule, la première extrémité définissant une entrée d'onde sonore, et une deuxième extrémité opposée, le conduit secondaire comprenant une sortie d'onde sonore située à proximité de l'extrémité arrière de la cellule.

Selon une caractéristique, la sortie d'onde sonore du conduit secondaire est de diamètre inférieur à celui de l'entrée d'onde sonore.

Selon une caractéristique, la sortie d'onde sonore du circuit secondaire est disposée au niveau de l'extrémité distale du conduit secondaire.

Selon une caractéristique, la sortie d'onde sonore du circuit secondaire est disposée dans la paroi du conduit secondaire, dans sa moitié arrière, c'est-à-dire proximale à l'extrémité arrière de la cellule.

Selon une caractéristique, la sortie d'onde sonore du circuit secondaire est de forme circulaire.

L'invention concerne en outre un panneau acoustique comprenant une structure à âme alvéolaire obtenue selon le procédé tel que décrit précédemment.

L'invention concerne en outre une nacelle comprenant un panneau acoustique comprenant une structure à âme alvéolaire obtenue selon le procédé tel que décrit précédemment.

D'autres caractéristiques et avantages de la présente invention apparaîtront à la lecture de la description qui va suivre et à l'examen des figures annexées dans lesquelles :
[Fig. 1] La figure 1 est une vue schématique en perspective d'un premier mode de réalisation d'une cellule acoustique obtenue selon le procédé de l'invention.
[Fig. 2] La figure 2 est une vue schématique en perspective d'un deuxième mode de réalisation d'une cellule acoustique obtenue selon le procédé de l'invention.
[Fig. 3] La figure 3 est une vue schématique en perspective illustrant une première étape du procédé de l'invention selon un mode de réalisation.
[Fig. 4] La figure 4 est une vue schématique en perspective illustrant une deuxième étape du procédé de l'invention selon le mode de réalisation de la figure 3.
[Fig. 5] La figure 5 est une vue schématique en coupe transversale illustrant un bloc non expansé obtenu lors de l'étape de fixation du procédé de l'invention selon un autre mode de réalisation.
[Fig. 6] La figure 6 est une vue schématique illustrant une variante du procédé de l'invention illustré à la figure 3.

Dans la description qui va suivre et dans les revendications, des composants identiques, similaires ou analogues seront désignés par les mêmes chiffres de référence et on emploiera les termes « avant », « arrière », « horizontal », « vertical », « supérieur », « inférieur », etc. à titre non limitatif et en référence aux dessins afin de faciliter la description.

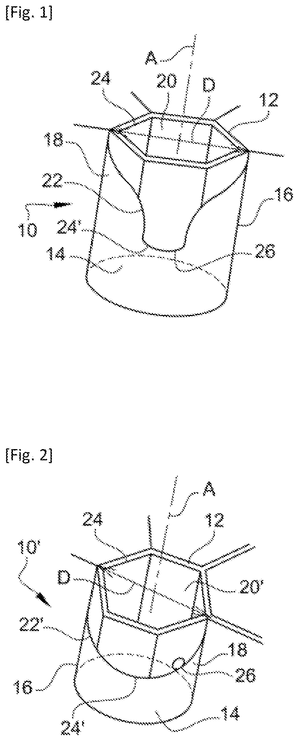

Les figures 1 et 2 représentent des cellules acoustiques 10, 10' de structure à âme alvéolaire pour panneau d'atténuation acoustique, selon deux modes de réalisation. Les cellules acoustiques 10, 10' s'étendent selon un axe principal A. L'axe principal A correspond à un axe de propagation d'une onde sonore, de sorte que la structure à âme alvéolaire permette d'atténuer l'onde sonore. Plus précisément, les cellules acoustiques 10, 10' comportent une extrémité dite avant 12, et une extrémité dite arrière 14 opposée à l'extrémité avant 12. Les cellules acoustiques 10, 10' sont délimitées par une paroi périphérique 16 définissant un conduit 18, dit conduit primaire. Le conduit primaire 18 est un conduit de circulation de l'onde sonore.

Les cellules acoustiques peuvent présenter une forme polygonale déployable, par exemple hexagonale.

La paroi périphérique 16 peut être plane. Elle peut être réalisée en alliage d'aluminium ou en un matériau composite tel qu'un matériau à matrice phénolique, époxyde, bismaléideimide (BMI) ou polyimide et comportant des fibres telles que des fibres de verre, des fibres déposées sous la marque Nomex ou Kevlar, ou en un matériau composite de la famille des matériaux dits céramiques, à base de fibres de carbone ou de SiC ou d'oxydes aluminés, et à matrice céramisée telle que géopolymères, Sic ou oxydes aluminés.

Dans une variante non représentée, les cellules acoustiques présentent des parois périphériques ondulées.

Dans le mode de réalisation de la figure 1, la cellule acoustique 10 présente un conduit secondaire 20 comprenant une paroi 22 de conduit secondaire de forme tronconique. En outre, le conduit secondaire 20 peut présenter une polygonale.

En variante, dans le mode de réalisation de la figure 2, la cellule acoustique 10' présente un conduit secondaire 20' comprenant une paroi 22' de conduit secondaire en forme d'ogive.

Dans des variantes non représentées, la paroi de conduit présente d'autres formes telles que des formes coniques ou tronconiques ou de demi-cercle.

Les conduits secondaires 20, 20' comprennent une première extrémité 24 proximale à l'extrémité avant 12 de la cellule acoustique, et une deuxième extrémité 24' opposée. La première extrémité 24 définie une ouverture correspondant à une entrée d'onde sonore. En outre, les conduits secondaires comprennent une autre ouverture 26 correspondant à une sortie d'onde sonore.

Dans le mode de réalisation de la figure 1, la sortie 26 d'onde sonore est disposée au niveau de la deuxième extrémité 24' du conduit secondaire 20.

Dans le mode de réalisation de la figure 2, la sortie 26 d'onde sonore est disposée dans la paroi 22' du conduit secondaire 20', à proximité de la deuxième extrémité 24'.

L'entrée 24 d'onde sonore est située au niveau de l'extrémité avant 12 de la cellule acoustique 10, 10', tandis que la sortie 26 d'onde sonore est située à proximité de l'extrémité arrière 14 de la cellule acoustique 10, 10'. La sortie 26 d'onde sonore peut être de diamètre inférieur à celui de l'entrée 24 d'onde sonore. Elle peut être de forme circulaire.

Les cellules 10, 10' peuvent avoir une dimension maximale D de l'ordre de 20 mm.

Le matériau constitutif des conduits secondaires 20, 20' peut être un matériau organique, de préférence choisi parmi les groupes de thermoplastiques, tel que par exemple les PEI PEEK, PI, Polyester, PA.

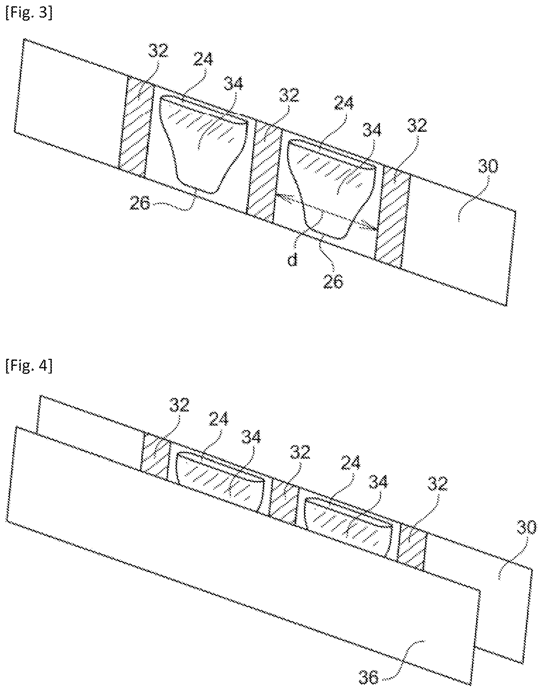

Les figures 3 à 5 illustrent un procédé de fabrication d'une structure à âme alvéolaire pour panneau d'atténuation acoustique, selon un mode de réalisation de l'invention, comprenant des cellules acoustiques telles que décrites précédemment.

Ce procédé comprend une étape dite de fixation dans laquelle on fournit une première plaque 30 longitudinale, sur laquelle on applique une pluralité de bandes 32 adhésives parallèles entre elles et transversales à la direction longitudinale de la première plaque 30.

Lors de cette étape de fixation, on fournit également un élément 34 aplati présentant la forme d'un conduit secondaire 20, sous forme aplatie, d'une cellule acoustique 10. Dans le mode de réalisation des figures 3 à 5, on fournit deux éléments 34 de sorte à former deux cellules acoustiques. Cependant une multitude d'éléments 34 peuvent être fournis, de façon à former une multitude de cellules acoustiques.

L'élément 34 comprend une paroi correspondant à la paroi 22 du conduit secondaire, une ouverture dite avant correspondant à l'entrée 24 d'onde sonore et une ouverture dite arrière correspondant à la sortie 26 d'onde sonore.

L'élément 34 peut être fixé par collage sur la première plaque 30 entre deux bandes 32 adhésives. Plus particulièrement, l'élément 34 peut être fixé par collage sur la première plaque 30, au niveau de son entrée 24 d'onde sonore. La sortie 26 d'onde sonore de l'élément 34 est disposée dans une partie non collée de l'élément 34.

Dans le mode de réalisation des figures 3 à 5, les éléments 34 sont fixés par collage entre deux bandes adhésives de sorte à permettre de former deux cellules acoustiques accolées.

Enfin, lors de cette étape de fixation, on applique une deuxième plaque 36 sur la première plaque 30, de sorte à prendre en sandwich l'élément 34. La deuxième plaque 36 peut être fixée par collage sur les bandes 32 adhésives et sur l'élément 34 au niveau de son entrée 24 d'onde sonore. On obtient alors un ensemble sensiblement plat, comprenant la première plaque 30, la deuxième plaque 36 et l'élément 34.

Les bandes 32 adhésives correspondent à des zones nodales, c'est-à-dire des zones de jonction entre les première 30 et deuxième 36 plaques.

Ensuite, le procédé comprend une étape de déploiement dans laquelle les première 30 et deuxième 36 plaques sont écartées l'une de l'autre de sorte à déployer l'élément 34 pour former le conduit secondaire 20. Les premières 30 et deuxième 36 plaques collées au niveau des zones nodales correspondent à la paroi périphérique 16 des cellules acoustiques 10. Ainsi, les bandes 32 adhésives permettent de former les parois périphériques des cellules acoustiques. Lors de l'étape de déploiement, les première 30 et deuxième 36 plaques sont écartées de sorte à former le conduit primaire 18 des cellules acoustiques.

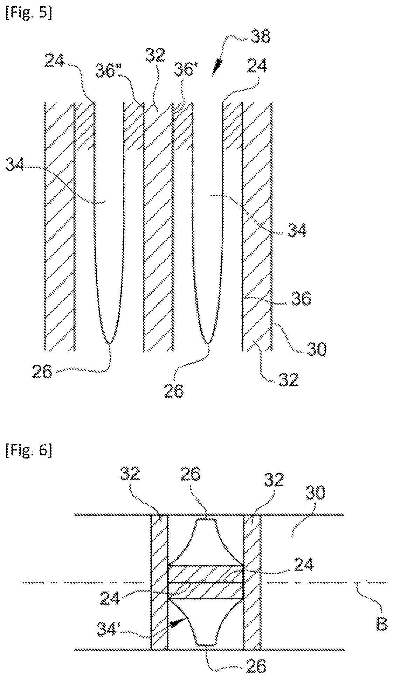

Avant l'étape de déploiement, on peut reproduire l'étape de fixation sur la deuxième plaque 36, de sorte à obtenir une superposition de plaques 30, 36, 36', 36" (figure 5) prenant en sandwich des éléments 34 correspondant à des conduits secondaires aplatis. D'une plaque à l'autre, les éléments 34 sont avantageusement disposés en quinconce. On obtient un bloc 38 non expansé, nommé également bloc nida non expansé.

La partie non collée de l'élément 34 peut présenter un périmètre plus faible que le périmètre de la partie collée, nommé périmètre d'attache. Le périmètre d'attache peut être de l'ordre de 150 mm.

Les bandes 32 adhésives peuvent être tout moyen de collage tel que des films de colle ou tout autre élément collant.

Dans un mode de réalisation, les bandes 32 adhésives sont des bandes organiques qui sont polymérisées avant l'étape de déploiement. Cette étape de polymérisation est nommée étape de consolidation.

Les bandes 12 adhésives peuvent être espacées d'une distance d de l'ordre de 50 mm. Dans un mode de réalisation, la distance d d'espacement entre deux bandes adhésives est variable le long d'une plaque.

Les première 30 et deuxième 36 plaques peuvent présenter des pliures destinées à délimiter des arêtes des cellules acoustiques de sorte à obtenir des cellules acoustiques polygonales telles que hexagonales.

En outre, l'élément 34 peut présenter des pliures destinées à délimiter des arêtes pour former un conduit secondaire polygonal.

Le matériau constitutif des première 30 et deuxième 36 plaques peut être un alliage d'aluminium, de sorte à former des parois périphériques de cellules acoustiques en alliage d'aluminium.

En variante, le matériau constitutif des première 30 et deuxième 36 plaques peut être :
- un matériau composite tel qu'un matériau à matrice phénolique, époxyde, bismaléideimide (BMI) ou polyimide et comportant des fibres telles que des fibres de verre, des fibres déposées sous la marque Nomex ou Kevlar, ou
- un matériau composite de la famille des matériaux dits céramiques, à base de fibres de carbone ou de SiC ou d'oxydes aluminés, et à matrice céramisée telle que géopolymères, Sic ou oxydes aluminés,
de sorte à former des parois périphériques de cellules acoustiques dans l'un de ces matériaux.

Le matériau constitutif de l'élément 34 peut être un matériau organique, de préférence choisi parmi les groupes de thermoplastiques, tel que par exemple les PEI PEEK, PI, Polyester, PA, de sorte à former des conduits secondaires de cellules acoustiques en matériau organique.

Dans une variante représentée à la figure 6, lors de l'étape de fixation, on fournit un élément 34' présentant la forme de deux conduits secondaires aplatis, reliés par leur entrée 24 d'onde sonore. Comme pour le mode de réalisation des figures 3 à 5, cet élément 34' peut être fixé par collage sur la première plaque 30, entre deux bandes 32 adhésives, au niveau des entrées 24 d'onde sonore, puis on applique une deuxième plaque 36 sur la première plaque 30, de sorte à prendre en sandwich cet élément 34'. Dans la variante de la figure 6, le procédé comporte une étape de découpe selon un axe B transversal à la direction longitudinale des plaques, de sorte à dissocier l'élément 34' pour former deux ensembles distinct dont l'un comporte un élément aplati correspondant à un conduit secondaire et l'autre comporte un autre élément aplati correspondant à un conduit secondaire.

Cette étape de découpe peut être réalisée avant l'étape de déploiement.

En variante, cette étape de découpe peut être réalisée après l'étape de déploiement, par usinage.

## Revendications

1. Procédé de fabrication d'une structure à âme alvéolaire pour panneau d'atténuation acoustique, la structure à âme alvéolaire comportant une pluralité de cellules (10, 10') acoustiques accolées qui forment l'âme alvéolaire, chaque cellule acoustique s'étendant suivant un axe (A) principal correspondant à un axe de propagation d'une onde sonore, depuis une extrémité avant (12) jusqu'à une extrémité arrière (14), et étant délimitée par une paroi périphérique (16) définissant un conduit primaire (18) de circulation de l'onde sonore, au moins une cellule comportant un conduit secondaire (20, 20') de circulation de l'onde sonore, le conduit secondaire comprenant une paroi (22, 22') de conduit secondaire, présentant une première extrémité (24) proximale à l'extrémité avant (12) de la cellule, la première extrémité (24) définissant une entrée d'onde sonore, et une deuxième extrémité (24') opposée, le conduit secondaire comprenant une sortie (26) d'onde sonore située à proximité de l'extrémité arrière (14) de la cellule, le procédé comprenant :
- Une étape de fixation dans laquelle :
- On applique, sur une première plaque (30) longitudinale, des bandes (32) adhésives parallèles entre elles et transversales à la direction longitudinale de ladite première plaque, de sorte à former des zones nodales,
- On fixe le conduit secondaire (20, 20') sous forme d'un élément (34, 34') aplati, sur la première plaque entre deux zones nodales (32), par collage au niveau de son entrée (24) d'onde sonore,
- On applique une deuxième plaque (36) de sorte qu'elle soit fixée par collage aux zones nodales (32), et à l'élément (34, 34') aplati au niveau de l'entrée (24) d'onde ;
- Une étape de déploiement dans laquelle les première (30) et deuxième (36) plaques sont écartées l'une de l'autre de sorte à former la paroi périphérique (16) des cellules (10, 10') et de sorte que l'élément (34, 34') aplati soit déployé pour former le conduit secondaire (20, 20').

2. Procédé selon la revendication précédente, dans lequel l'étape de fixation est répétée de préférence en alternant les positions des zones nodales (32), de façon à obtenir plusieurs couches superposées d'éléments (34, 34') aplatis entre des première (30) et deuxième (36) plaques, avant l'étape de déploiement.

3. Procédé selon l'une quelconque des revendications précédentes, dans lequel l'élément (34') aplati présente la forme de deux conduits secondaires aplatis, reliés par leur entrée d'onde sonore respective.

4. Procédé selon la revendication précédente, comprenant une étape de découpe, transversalement à la direction longitudinale des première (30) et deuxième (36) plaques, de sorte à dissocier l'élément (34') aplati pour former deux ensemble distinct, l'un comportant un premier conduit secondaire et l'autre comportant un deuxième conduit secondaire.

5. Procédé selon la revendication précédente, dans lequel l'étape de découpe est réalisée par usinage après l'étape de déploiement.

6. Procédé selon la revendication 4, dans lequel l'étape de découpe est réalisée avant l'étape de déploiement.

7. Procédé selon l'une quelconque des revendications précédentes, dans lequel l'élément (34, 34') aplati présente une forme conique ou tronconique aplatie de sorte que le conduit secondaire (20) présente une forme conique ou tronconique.

8. Procédé selon l'une quelconque des revendications précédentes, dans lequel les première (30) et deuxième (36) plaques présentent des pliures destinées à délimiter des arêtes pour obtenir des cellules acoustiques polygonales lors de l'étape de déploiement.

9. Procédé selon la revendication précédente, dans lequel l'élément (34, 34') aplati présente des pliures destinées à délimiter des arêtes pour obtenir un conduit secondaire de forme conique ou tronconique polygonale.

10. Procédé selon l'une quelconque des revendications précédentes, dans lequel le matériau constitutif des première et deuxième plaques est un alliage d'aluminium ou un matériau composite tel qu'un matériau à matrice phénolique, époxyde, bismaléideimide (BMI) ou polyimide et comportant des fibres telles que des fibres de verre, des fibres déposées sous la marque Nomex ou Kevlar, et le matériau constitutif du conduit secondaire est un matériau organique, de préférence choisi parmi les groupes de thermoplastiques, tel que par exemple les PEI PEEK, PI, Polyester, PA.

11. Structure à âme alvéolaire obtenue selon le procédé selon l'une quelconque des revendications précédentes, comprenant au moins une cellule acoustique s'étendant suivant un axe (A) principal correspondant à un axe de propagation d'une onde sonore, depuis une extrémité avant (12) jusqu'à une extrémité arrière (14), et étant délimitée par une paroi périphérique (16) définissant un conduit primaire (18) de circulation de l'onde sonore, la cellule comportant un conduit secondaire (20, 20') de circulation de l'onde sonore, le conduit secondaire comprenant une paroi (22, 22') de conduit secondaire, présentant une première extrémité (24) proximale à l'extrémité avant (12) de la cellule, la première extrémité (24) définissant une entrée d'onde sonore, et une deuxième extrémité (24') opposée, le conduit secondaire comprenant une sortie (26) d'onde sonore située à proximité de l'extrémité arrière (14) de la cellule.

12. Structure à âme alvéolaire selon la revendication précédente, dans laquelle la sortie (26) d'onde sonore du conduit secondaire (20, 20') est de diamètre inférieur à celui de l'entrée (24) d'onde sonore.

13. Structure à âme alvéolaire selon l'une quelconque des revendications 11 à 12, dans laquelle la sortie (26) d'onde sonore du circuit secondaire (20) est disposée au niveau de l'extrémité distale (24') du conduit secondaire.

14. Structure à âme alvéolaire selon l'une quelconque des revendications 11 à 12, dans laquelle la sortie (26) d'onde sonore du circuit secondaire (20') est disposée dans la paroi (22') du conduit secondaire, dans sa moitié arrière, c'est-à-dire proximale à l'extrémité arrière de la cellule.

15. Structure à âme alvéolaire selon l'une quelconque des revendications 11 à 14, dans laquelle la sortie (26) d'onde sonore du circuit secondaire est de forme circulaire.

## Patentansprüche

1. Verfahren zum Herstellen einer Alveolarkernstruktur für eine Schalldämmplatte, wobei die Alveolarkernstruktur eine Vielzahl von aneinandergrenzenden akustischen Zellen (10, 10') aufweist, die den Alveolarkern bilden, wobei sich jede akustische Zelle entlang einer Hauptachse (A), die einer Ausbreitungsachse einer Schallwelle entspricht, von einem vorderen Ende (12) bis zu einem hinteren Ende (14) erstreckt und durch eine Umfangswand (16) begrenzt ist, die einen primären Kanal (18) für die Zirkulation der Schallwelle definiert, wobei mindestens eine Zelle einen sekundären Kanal (20, 20') für die Zirkulation der Schallwelle aufweist, wobei der sekundäre Kanal eine Wand (22, 22') des sekundären Kanals umfasst, die ein erstes Ende (24) proximal zum vorderen Ende (12) der Zelle aufweist, wobei das erste Ende (24) einen Schallwelleneingang und ein zweites gegenüberliegendes Ende (24') definiert, wobei der sekundäre Kanal einen Schallwellenausgang (26) umfasst, der sich in der Nähe des hinteren Endes (14) der Zelle befindet, wobei das Verfahren Folgendes umfasst:
- Einen Schritt des Fixierens mit Folgendem:
- Anbringen von Klebestreifen (32) parallel zueinander auf einer ersten Längsplatte (30) und quer zur Längsrichtung der ersten Platte, um Knotenzonen zu bilden,
- Fixieren des sekundären Kanals (20, 20') in Form eines abgeflachten Elements (34, 34') auf der ersten Platte zwischen zwei Knotenzonen (32) durch Kleben an seinem Schallwelleneingang (24),
- Anbringen einer zweiten Platte (36), so dass sie durch Kleben an den Knotenzonen (32) und an dem abgeflachten Element (34, 34') am Welleneingang (24) fixiert wird;
- einen Schritt des Bereitstellens, bei dem die erste (30) und die zweite (36) Platte voneinander beabstandet sind, um die Umfangswand (16) der Zellen (10, 10') zu bilden, und so dass das abgeflachte Element (34, 34') entfaltet wird, um den sekundären Kanal (20, 20') zu bilden.

2. Verfahren nach dem vorhergehenden Anspruch, wobei der Schritt des Fixierens wiederholt wird, vorzugsweise durch Abwechseln der Positionen der Knotenzonen (32), so dass mehrere übereinanderliegende Schichten von abgeflachten Elementen (34, 34') zwischen der ersten (30) und der zweiten (36) Platte vor dem Schritt des Entfaltens erhalten werden.

3. Verfahren nach einem der vorhergehenden Ansprüche, wobei das abgeflachte Element (34') die Form zweier abgeflachter sekundärer Kanäle aufweist, die durch ihren jeweiligen Schallwelleneingang verbunden sind.

4. Verfahren nach dem vorhergehenden Anspruch, umfassend einen Schritt des Schneidens der ersten (30) und der zweiten (36) Platte quer zur Längsrichtung, um das abgeflachte Element (34') zu trennen, um zwei verschiedene Anordnungen zu bilden, wobei eine einen ersten sekundären Kanal aufweist und die andere einen zweiten sekundären Kanal aufweist.

5. Verfahren nach dem vorhergehenden Anspruch, wobei der Schritt des Schneidens durch Zerspanung nach dem Schritt des Entfaltens durchgeführt wird.

6. Verfahren nach Anspruch 4, wobei der Schritt des Schneidens vor dem Schritt des Entfaltens durchgeführt wird.

7. Verfahren nach einem der vorhergehenden Ansprüche, wobei das abgeflachte Element (34, 34') eine abgeflachte konische oder kegelstumpfförmige Form aufweist, so dass der sekundäre Kanal (20) eine konische oder kegelstumpfförmige Form aufweist.

8. Verfahren nach einem der vorhergehenden Ansprüche, wobei die erste (30) und die zweite (36) Platte Falten aufweisen, die dazu bestimmt sind, Kanten zu begrenzen, um während des Schritts des Entfaltens polygonale akustische Zellen zu erhalten.

9. Verfahren nach dem vorhergehenden Anspruch, wobei das abgeflachte Element (34, 34') Falten aufweist, die dazu bestimmt sind, Kanten zu begrenzen, um einen sekundären Kanal mit einer polygonalen konischen oder kegelstumpfförmigen Form zu erhalten.

10. Verfahren nach einem der vorhergehenden Ansprüche, wobei das Material, aus dem die erste und die zweite Platte bestehen, eine Aluminiumlegierung oder ein Verbundmaterial ist, beispielsweise ein Material mit einer Phenol-, Epoxid-, Bismaleideimid(BMI)- oder Polyimid-Matrix, das Fasern wie Glasfasern, unter der Marke Nomex oder Kevlar registrierte Fasern, umfasst, und das Material, aus dem der sekundäre Kanal besteht, ein organisches Material ist, vorzugsweise ausgewählt aus den Gruppen der Thermoplasten, wie zum Beispiel PEI, PEEK, PI, Polyester, PA.

11. Alveolarkernstruktur, die durch das Verfahren nach einem der vorhergehenden Ansprüche erhalten wird, umfassend mindestens eine akustische Zelle, die sich entlang einer Hauptachse (A), die einer Ausbreitungsachse einer Schallwelle entspricht, von einem vorderen Ende (12) bis zu einem hinteren Ende (14) erstreckt und durch eine Umfangswand (16) begrenzt ist, die einen primären Kanal (18) für die Zirkulation der Schallwelle definiert, wobei mindestens eine Zelle einen sekundären Kanal (20, 20') für die Zirkulation der Schallwelle aufweist, wobei der sekundäre Kanal eine Wand (22, 22') des sekundären Kanals umfasst, die ein erstes Ende (24) proximal zum vorderen Ende (12) der Zelle aufweist, wobei das erste Ende (24) einen Schallwelleneingang und ein zweites gegenüberliegendes Ende (24') definiert, wobei der sekundäre Kanal einen Schallwellenausgang (26) umfasst, der sich in der Nähe des hinteren Endes (14) der Zelle befindet.

12. Alveolarkernstruktur nach dem vorhergehenden Anspruch, wobei der Schallwellenausgang (26) des sekundären Kanals (20, 20') einen kleineren Durchmesser als der des Schallwelleneingangs (24) aufweist.

13. Alveolarkernstruktur nach einem der Ansprüche 11 bis 12, wobei der Schallwellenausgang (26) des sekundären Kanals (20) am distalen Ende (24') des sekundären Kanals angeordnet ist.

14. Alveolarkernstruktur nach einem der Ansprüche 11 bis 12, wobei der Schallwellenausgang (26) des sekundären Kanals (20') in der Wand (22') des sekundären Kanals in dessen hinterer Hälfte, also proximal zum hinteren Ende der Zelle, angeordnet ist.

15. Alveolarkernstruktur nach einem der Ansprüche 11 bis 14, wobei der Schallwellenausgang (26) des sekundären Kanals kreisförmig ist.

## Claims

1. A method for manufacturing an alveolar core structure for an acoustic attenuation panel, the alveolar core structure including a plurality of adjoining acoustic cells (10, 10') which form the alveolar core, each acoustic cell extending along a main axis (A) corresponding to an axis of propagation of a sound wave, from a front end (12) up to a rear end (14), and being delimited by a peripheral wall (16) defining a primary duct (18) for circulating the sound wave, at least one cell including a secondary duct (20, 20') for circulating the sound wave, the secondary duct comprising a secondary duct wall (22, 22'), having a first end (24) proximal to the front end (12) of the cell, the first end (24) defining a sound wave inlet, and an opposite second end (24'), the secondary duct comprising a sound wave outlet (26) located near the rear end (14) of the cell, the method comprising:
- a fastening step in which:
- on a first longitudinal plate (30), adhesive tapes (32) parallel to each other and transverse to the longitudinal direction of said first plate are applied, so as to form nodal areas,
- the secondary duct (20, 20') in the form of a flattened element (34, 34') is fastened, on the first plate between two nodal areas (32), by gluing at its sound wave inlet (24),
- a second plate (36) is applied so that it is fastened by gluing to the nodal areas (32), and to the flattened element (34, 34') at the wave inlet (24);
- a deployment step in which the first (30) and second (36) plates are moved away from one another so as to form the peripheral wall (16) of the cells (10, 10') and so that the flattened element (34, 34') is deployed to form the secondary duct (20, 20').

2. The method according to the preceding claim, wherein the fastening step is repeated preferably by alternating the positions of the nodal areas (32), so as to obtain several superimposed layers of flattened elements (34, 34') between first (30) and second (36) plates, before the deployment step.

3. The method according to any one of the preceding claims, wherein the flattened element (34') is shaped as two flattened secondary ducts, linked by their respective sound wave inlet.

4. The method according to the preceding claim, comprising a step of cutting, transversely to the longitudinal direction of the first (30) and second (36) plates, so as to separate the flattened element (34') to form two distinct assemblies, one including a first secondary duct and the other including a second secondary duct.

5. The method according to the preceding claim, wherein the cutting step is carried out by machining after the deployment step.

6. The method according to claim 4, wherein the cutting step is carried out before the deployment step.

7. The method according to any one of the preceding claims, wherein the flattened element (34, 34') has a flattened conical or frustoconical shape so that the secondary duct (20) has a conical or frustoconical shape.

8. The method according to any one of the preceding claims, wherein the first (30) and second (36) plates have folds intended to delimit edges to obtain polygonal acoustic cells during the deployment step.

9. The method according to the preceding claim, wherein the flattened element (34, 34') has folds intended to delimit edges to obtain a polygonal conical or frustoconical-shaped secondary duct.

10. The method according to any one of the preceding claims, wherein the constituent material of the first and second plates is an aluminum alloy or a composite material such as a phenolic, epoxy, bismaleideimide (BMI) or polyimide matrix material and including fibers such as glass fibers, fibers registered under the trademark Nomex or Kevlar, and the constituent material of the secondary duct is an organic material, preferably selected from the groups of thermoplastics, such as, for example, PEI PEEK, PI, Polyester, PA.

11. An alveolar core structure obtained according to the method according to any one of the preceding claims, comprising at least one acoustic cell extending along a main axis (A) corresponding to an axis of propagation of a sound wave, from a front end (12) up to a rear end (14), and being delimited by a peripheral wall (16) defining a primary duct (18) for circulating the sound wave, the cell including a secondary duct (20, 20') for circulating the sound wave, the secondary duct comprising a secondary duct wall (22, 22'), having a first end (24) proximal to the front end (12) of the cell, the first end (24) defining a sound wave inlet, and an opposite second end (24'), the secondary duct comprising a sound wave outlet (26) located near the rear end (14) of the cell.

12. The alveolar core structure according to the preceding claim, wherein the sound wave outlet (26) of the secondary duct (20, 20') has a diameter smaller than that of the sound wave inlet (24).

13. The alveolar core structure according to any one of claims 11 to 12, wherein the sound wave outlet (26) of the secondary circuit (20) is disposed at the distal end (24') of the secondary duct.

14. The alveolar core structure according to any one of claims 11 to 12, wherein the sound wave outlet (26) of the secondary circuit (20') is disposed in the wall (22') of the secondary duct, in its rear half, that is to say proximal to the rear end of the cell.

15. The alveolar core structure according to any one of claims 11 to 14, wherein the sound wave outlet (26) of the secondary circuit is circular in shape.
